# EUROPÄISCHE PATENTSCHRIFT

(11) **EP 0 543 097 B1**
(45) Veröffentlichungstag und Bekanntmachung des Hinweises auf die Patenterteilung: **12.03.1997**
(21) Anmeldenummer: 92115025.6
(22) Anmeldetag: 03.09.1992
(51) Int. Cl.: C05F 17/00, C05F 17/02

(54) **Verfahren und Vorrichtung zur biologischen Umwandlung organischer Stoffe in Biomasse**
Process and device for the biological conversion of organic products in biomass
Procédé et dispositif de conversion biologique de produits organiques en biomasse

(30) Priorität: 21.11.1991 EP 91119832
(43) Veröffentlichungstag der Anmeldung: 26.05.1993
(73) Patentinhaber: Böhnensieker, Franz, D-59320 Ennigerloh (DE)
(72) Erfinder: Böhnensieker, Franz, D-59320 Ennigerloh (DE)
(74) Vertreter: Schmidt, Horst, Dr.

(56) Entgegenhaltungen:
- EP-A- 0 441 994
- US-A- 3 138 447
- US-A- 3 930 799

## Beschreibung

Die Erfindung betrifft ein Verfahren und eine Vorrichtung zur biologischen Umwandlung (Kompostierung) organischer Stoffe in Biomasse, indem die organischen Stoffe in einer im wesentlichen geschlossenen Umgebung eine Zeitlang durch Feinzerkleinern und Mischen behandelt werden.

Bekanntlich können organische Stoffe, insbesondere Abfallstoffe aus privaten Haushalten, Gaststättenbetrieben und dgl. in wiederverwendbare wertvolle Biomasse umgewandelt (kompostiert) werden. Es ist bekannt (EP-A-0441994), die Kompostierung in einem trommelförmigen Reaktionsbehälter durchzuführen, der zusammen mit einer separaten Aufbereitungsvorrichtung betrieben wird, in der das Gut vor Einführung in den Reaktionsbehälter auf eine geeignete Partikelgrösse zerkleinert wird, so dass die Kompostierung im Reaktionsbehälter mit verkürzter Startphase ablaufen kann. Die Aufbereitung kann dabei mit einer teilweisen Kompostierung des zu behandelnden Gutes einhergehen. Die relaliv aufwendige Anlage ist für einen stationären Einsatz bei Gaststättenbetrieben und dgl. zumeist nicht geeignet. Bekannt ist es ferner, die Kompostierung in einem einstufigen Betrieb (DE-C-38 44 700) mit relativ kompakten Anlagen vorzunehmen, indem das Zerkleinern und Mischen des zu behandelnden Gutes in ein und demselben Reaktor solange betrieben wird, bis eine weitgehende Kompostierung erhalten wird. In diesem Zusammenhang ist es auch bekannt (vgl. z.B. DE-A-38 19 979), die einstufige Kompostierung in einer Drehtrommel durchzuführen. Die Drehtrommel kann ggf. in zwei Kammern unterteilt sein (US-A-38 37 180, DE-A-40 00 916), was einen wechselseitigen Betrieb ermöglicht, so dass auch kleinere Chargen behandelt werden können. Die einstufige chargenweise Kompostierung ist mit einer vergleichsweisen langen Behandlungszeit wegen der erforderlichen langen Anlaufzeit bei jeder Charge verbunden, selbst wenn, wie es ebenfalls schon vorgeschlagen wurde (GB-C-1 022 127), dem zu behandelnden Gut jedesmal eine geeignete Menge an Mikroorganismen zur Beschleunigung der Umwandlung zugesetzt wird. Häufig wird daher ein Produkt erhalten, das für die weitere Verwendung, z.B. in Gärtnereien und dgl., ohne Nachbehandlung ungeeignet ist. Bekannt sich weiter Drei- oder Mehrkammer-Kompostierungsanlagen (US-A-3138447 und US-A-3930799), bei denen in jeder Kammer eine bestimmte Spezies von Mikroorganismen unter entsprechenden klimatischen Bedingungen gehalten wird. Eine Überführung des zu behandelnden, ggf. grob zerkleinerten Gutes von einer Kammer in die nächste findet statt, wenn die Kompostierung durch die spezielle Spezies von Mikroorganismen in der betreffenden Kammer bis zu einem Endstadium abgeschlossen ist.

Aufgabe der Erfindung ist die Schaffung eines Verfahrens und einer Vorrichtung der eingangs erwähnten Art, die geeignet sind, in einem quasi-kontinuierlichen Betrieb am Ort der Abfallentstehung die Umwandlung von Abfall in verwertbare Biomasse in verkürzter Behandlungszeit zu bewerkstelligen. Die Erfindung zielt insbesondere auf eine Verbesserung des biologischen Umwandlungsverfahren nach der DE-C-38 44 700 ab.

Zur Lösung der Aufgabe wird auf die kennzeichnenden Teile der Patentansprüche 1 und 9 verwiesen. Danach erfolgt die Behandlung des zu kompostierenden Gut in einer ersten Kammer nur solange, bis die Kompostierung ein bestimmtes Zwischenstadium erreicht hat, welches durch Erreichen einer dafür kennzeichnenden Temperatur in der ersten Kammer definiert ist. Ein Teil des bis zu diesem Zwischenstadium kompostierten Gutes wird sodann in eine zweite Kammer überführt, wo die Kompostierung bis zum Endstadium weitergeführt wird, was mit einem Absterben der Mikroorganismen einhergeht. Der in der ersten Kammer verbleibende Teil an nur bis zum Zwischenstadium kompostiertem Gut stellt sicher, dass in dieser Kammer weiterhin eine hohe Anzahl an aktiven Mikroorganismen vorhanden ist, die zum Angriff bei neu in die erste Kammer eingegebenem Gut zur Verfügung stehen, um den Prozess der Umwandlung dieses Gutes unverzüglich in die Wege zu leiten. Die Erfindung ermöglicht daher ohne gelegentliche Hinzufügung von Mikroorganismen einen kontinuierlichen bzw. quasi-kontinuierlichen Kompostierungsbetrieb, indem nach einer gewissen Anlaufphase ständig neues Gutes in die erste Kammer eingeführt und teilweise kompostiertes Gut von der ersten in die zweite Kammer zur Fertigkompostierung überführt werden kann. In beiden Kammern wird das Gut kontinuierlich oder intervallmässig umgewälzt und miteinander vermischt, wobei diese Behandlung mit einer Feinzerkleinerung des Gutes einhergehen kann. Dadurch wird gewährleistet, dass die Abfallstoffe mit der Umgebungsluft in Berührung kommen und damit den Mikroorganismen stets ausreichend Sauerstoff für ihre Arbeit zur Verfügung steht. Die Umwandlung als exothermer Prozess ist mit der Entwicklung von Wärme verbunden. Diese kann zur Erwärmung der in die Kammern eingeführten Frischluft ausgenutzt werden, so dass auf die Zufuhr von Primärenergie zur Erwärmung der Frischluft weitestgehend verzichtet werden kann. Ausserdem sind die Kammern bzw. das Gehäuse gegenüber der Aussenumgebung wärmeisoliert. Diese Massnahme zusammen mit dem Umstand, dass das Umwälzen, Mischen und Zerkleinern des Gutes in einer geschlossenen Umgebung stattfindet, ermöglicht es, dass die bei der Umwandlung freiwerdende Prozesswärme bis zum Abschluss der Reaktion erhalten bleibt, d.h. für die Schaffung optimaler Umwandlungsbedingungen in den einzelnen Kammern zur Verfügung steht. Wenn erwünscht, kann überschüssige Prozesswärme ausserdem zu einer Trocknung der in der zweiten Kammer erhaltenen Biomasse in einer dritten Kammer ausgenutzt werden. Das erfindungsgemässe Verfahren ermöglicht eine besonders kompakte Ausbildung der Vorrichtung, mit der das Verfahren praktiziert werden kann. Eine bevorzugte Ausführung einer solchen Vorrichtung sieht vor, dass die beiden Kammern in an sich bekannter Weise um eine im wesentlichen horizontale Achse drehbar angeordnet sind. Das Mischen und Umwälzen des Gutes in den Kammern kann daher in besonders einfacher Weise durch wechselseitiges gesteuertes (gemeinsames) Drehen der Kammern bewerkstelligt werden. Ausserdem lässt sich mit einfachen Mitteln eine Überführung des Gutes von der ersten in die zweite Kammer vornehmen.

Gemäss einem anderen Aspekt der Erfindung zeichnet sich eine Vorrichtung der in Rede stehenden Art, bestehend aus einem im wesentlichen geschlossenen Gehäuse mit einem Ein- und Auslass, einer Einrichtung zum Feinzerkleinern, und einer Einrichtung zum Mischen der im Gehäuse befindlichen organischen Stoffe, dadurch aus, dass das Gehäuse wenigstens zwei voneinander getrennte, im wesentlichen geschlossene Gehäusebereiche umfasst, von denen ein erster den Einlass und ein zweiter den Auslass aufweist, dass das Gehäuse um eine im wesentlichen horizontale Drehachse drehbar ist, dass eine Verbindungspassage mit einer Einrichtung zu deren Öffnen und Schliessen zwischen dem ersten und zweiten Gehäusebereich vorgesehen ist, dass die Zerkleinerungseinrichtung wenigstens ein Mahlwerk wenigstens im ersten Gehäusebereich umfasst, und dass eine Behältereinheit zum Aufnehmen des behandelten Gutes mit einer Einlassöffnung und einer Einrichtung zum lösbaren Ankuppeln der Behältereinheit an das Gehäuse vorgesehen ist, wobei die Einlassöffung in der angekuppelten Position der Behältereinheit zu einer Auslasspassage des Gehäuses ausgerichtet ist, um das behandelte Gut während des Drehens des Gehäuses in die Behältereinheit zu überführen. Nach Füllung kann die Behältereinheit vom Gehäuse abgenommen und durch eine leere Einheit ersetzt werden, was eine besonders wirschaftliche und hygienische weitere Handhabung der gewonnenen Biomasse ermöglicht. Dabei kann gemäss einer Weiterbildung der Erfindung an der Behältereinheit eine Einrichtung vorgesehen sein, die es ermöglicht, mehrere gefüllte Behältereinheiten an einer Sammelstelle zu einem Transportgebinde zusammenzufassen, das damit in besonders effektiver Weise, z.B. mittels eines Lastfahrzeuges, transportiert werden kann.

Aufgrund ihrer Kompaktheit eignet sich die Vorrichtung zum unmittelbaren Einsatz am Ort der Abfallentstehung, z.B. bei Gaststättenbetrieben und dgl., um relativ grosse Abfallmengen zu keiner weiteren Endbehandlung benötigender Biomasse verarbeiten zu können.

Die Erfindung wird nachfolgend anhand von Ausführungsformen und der Zeichnung näher erläutert. Es zeigen:
- Fig. 1: in perspektivischer, teilweise schematisierter Ansicht eine biologische Umwandlungsvorrichtung gemäss einer ersten Ausführungsform der Erfindung,
- Fig. 2: die Umwandlungsvorrichtung nach Fig. 1 in längsgeschnittener Ansicht zusammen mit einer schematischen Darstellung einer Steuereinrichtung zum Steuern der Funktionen der Umwandlungsvorrichtung,
- Fig. 3: in einer Ansicht ähnlich Fig. 2 eine modifizierte Umwandlungsvorrichtung mit zur Vereinfachung der Darstellung weggelassener Steuereinrichtung,
- Fig. 4: den Verlaufes der Temperatur und Feuchtigkeit bei der Umwandlungsvorrichtung nach Fig. 3,
- Fig. 5: in geschnittener fragmentarischer Ansicht eine Umwandlungsvorrichtung ähnlich der nach Fig. 3 gemäss einer weiteren Ausführungsform der Erfindung, und
- Fig. 6: in perspektivischer, teilweise schematischer Ansicht eine biologische Umwandlungsvorrichtung gemäss einer dritten Ausführungsform der Erfindung.

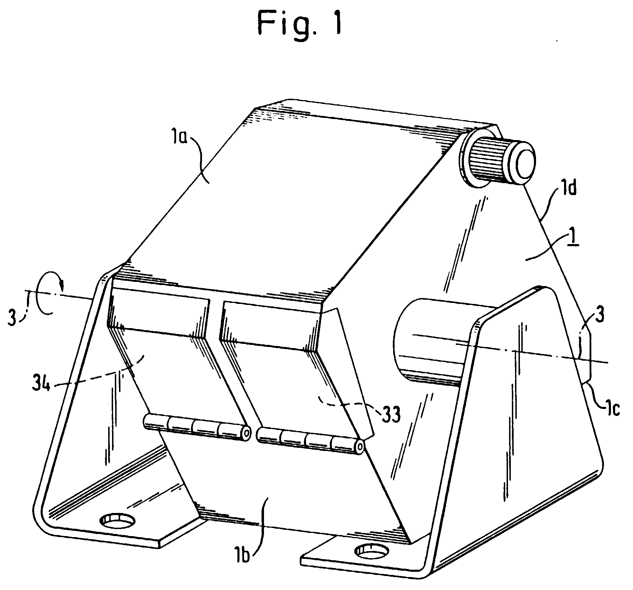

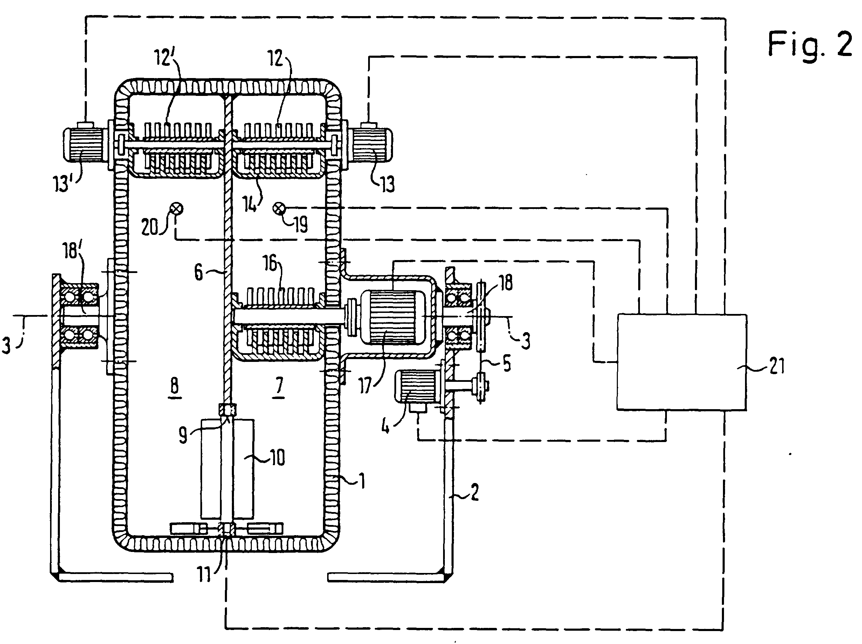

In Fig. 1 und 2, die eine eine erste Ausführungsform der Erfindung zeigen, bedeuten das Bezugszeichen 1 ein Gehäuse und das Bezugszeichen 2 ein Paar seitliche Rahmenteile, die zwischen sich eine horizontale Achse 3 definieren, um die das Gehäuse 1 durch die Rahmenteile 2 drehbeweglich gehalten ist.

An einer geeigneten Stelle längs des Umfanges des Gehäuses 1 ist ein Paar Öffnungen 33, 34 axial nebeneinander liegend vorgesehen, die durch die gezeigten Klappen verschlossen werden können.

Das Gehäuse 1 hat vorzugsweise, wie dargestellt, einen im wesentlichen unrunden Umriss mit z.B. vier im wesentlichen flachen Umfangswandbereichen 1a-1d, wobei angrenzende Paare dieser Umfangswandbereiche jeweils trichterförmige Sumpfbereiche im Inneren des Gehäuses 1 bilden, in denen sich das umzuwandelnde Gut ansammeln kann, wenn die betreffenden angrenzenden Umfangswandbereiche bei der Drehung nach unten weisen. Die Erfindung ist jedoch auf eine derartige Ausbildung des Gehäuses 1 nicht beschränkt. Vielmehr kann dieses auch eine runde oder andere als viereckige polygonale Umfangskonfiguration haben.

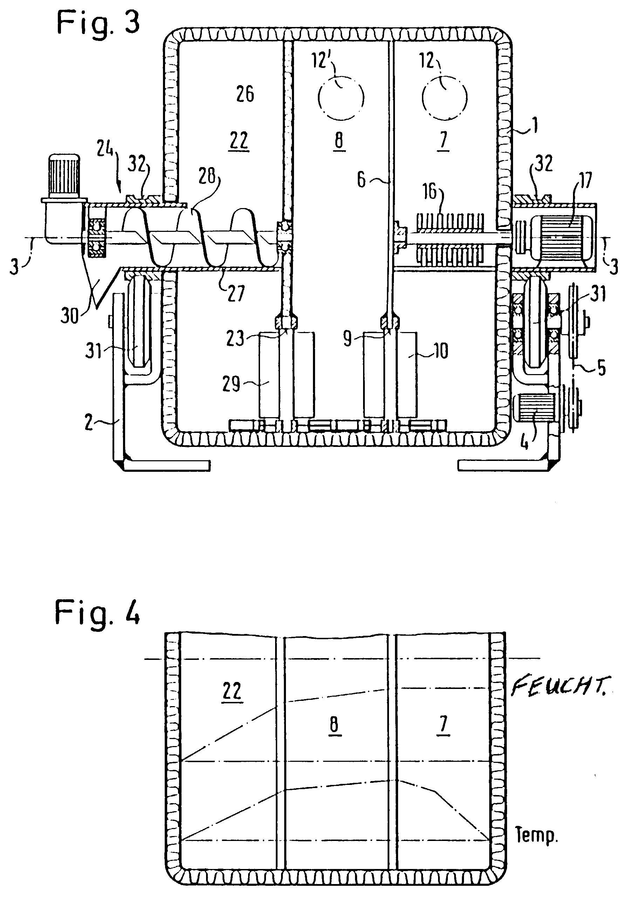

Wie Fig. 2 weiter zeigt, ist das Gehäuse 1 durch ein geeignetes Isolationsmaterial gegenüber der Aussenumgebung wärmeisoliert. Das Innere des Gehäuses 1 ist durch eine in Bezug auf die Achse 3 in einer radialen Ebene sich erstreckende Trennwand 6 in zwei in Axialrichtung nebeneinander liegende Gehäusebereiche oder Kammern 7, 8 unterteilt. Alternativ hierzu könnten auf der Achse 3 auch zwei selbständige Gehäuseeinheiten, die jeweils gegenüber der Aussenumgebung wärmeisoliert sind, angrenzend aneinander angeordnet sein. Ferner ist die Erfindung nicht auf ein Paar Gehäusebereiche bzw. -einheiten beschränkt. Vielmehr können auch weitere derartige Einheiten vorgesehen sein, wie dies z. B. in Fig. 3 gezeigt ist.

Über eine Passage oder Öffnung 9 in der Trennwand 6 sind die ansonsten im wesentlichen geschlossenen Gehäusebereiche 7, 8 miteinander verbunden. Die Verbindungspassage 9 kann mittels einer bei 10 angedeuteten Schliesseinrichtung gezielt geöffnet oder verschlossen werden. Obschon andere Einrichtungen vorgesehen sein können, umfasst die gezeigte Schliesseinrichtung ein in der Verbindungspassage 9 angeordnetes Schliesselement in Gestalt ener Drehklappe 10, die mittels eines geeigneten Betätigungsorganes 11, z.B. einer pneumatischen Kolbenzylindereinrichtung, zwischen einer Stellung, bei der die Verbindungspassage 9 geschlossen ist, und einer Stellung, bei der eine Verbindung zwischen den Gehäusebereichen 7 und 8 besteht, gedreht werden kann.

Die Verbindungspassage 9 ist, wie dargestellt, an einer radial aussenliegenden Stelle der Trennwand 6, vorzugsweise nahe einem Scheitelpunkt von zwei angrenzenden flachen Umfangswandbereichen 1a-1d des Gehäuses 1, vorgesehen, so dass sich im Bereich der Verbindungspassage 9 das zu behandelnde Gut bevorzugt ansammelt, wenn die Verbindungspassage 9 bei einer Drehung des Gehäuses 1 in eine unten liegende Position gelangt.

An einer radial aussenliegenden Stelle, z.B. diametral gegenüber der Verbindungspassage 9, ist im Inneren des ersten Gehäusebereiches 7 eine Zerkleinerungseinrichtung bzw. ein Mahlwerk 12 zum Feinzerkleinern des zu behandelnden Gutes vorgesehen. Das Mahlwerk 12 kann irgendeine geeignete Ausbildung haben. Bei der vorliegenden Ausführungsform umfasst das Mahlwerk 12 eine Vielzahl von Schneidelementen, die auf einer im Inneren des Gehäusebereiches 7 mittels einer Konsole 14 im wesentlich parallel zur Drehachse 3 gehaltenen Welle angeordnet sind. Ein derartiges Mahlwerk ist in der DE-U-87 14 138 beschrieben, auf die damit für weitere Details Bezug genommen werden kann. Mit einem aus dem Gehäuse 1 herausragenden Wellenende ist ein Antriebsmotor 13 gekoppelt, durch den die Welle und damit die Schneidelemente des Mahlwerkes in Drehbewegung versetzt werden können.

Obschon die diametrale Anordnung des Mahlwerkes 12 in Bezug auf die Verbindungspassage 9 bevorzugt wird, versteht es sich, dass das Mahlwerk 12 auch in einer nicht diametralen Beziehung zur Verbindungspassage 9 stehen kann, und dass ferner mehr als ein derartiges Mahlwerk 12, wenn erwünscht, im Inneren des ersten Gehäusebereiches 7 vorgesehen sein kann.

Wie ferner in Fig. 2 gezeigt ist, kann ein weiteres Mahlwerk 16 mit Antriebsmotor 17 mittig in Bezug auf die Drehachse 3 im Inneren des ersten Gehäusebereiches 7 angeordnet sein. Das Mahlwerk 16 ist vorzugsweise so ausgelegt, dass damit eine Grobzerkleinerung des in den Gehäusebereich 7 eingegebenen Gutes vorgenommen werden kann.

Im Inneren des zweiten Gehäusebereiches 8 kann ebenfalls eine Zerkleinerungseinrichtung vorgesehen sein. Das betreffende Mahlwerk 12' mit Antriebsmotor 13' kann dabei eine ähnliche Ausbildung haben wie das Mahlwerk 12 des ersten Gehäusebereiches 7. Obschon der Antrieb des Mahlwerkes 12' vorzugsweise unabhängig von dem des ersten Gehäusebereiches 7 ist, könnte auch ein gemeinsamer Antrieb für beide Mahlwerke 12, 12' vorgesehen sein, indem die Schneidelemente beider Mahlwerke 12, 12' auf einer gemeinsamen, beide Gehäusebereiche 7, 8 durchsetzenden Welle angeordnet sind.

Zur drehbaren Halterung um die Achse 3 weist das Gehäuse 1 an seinen gegenüberliegenden Stirnseiten Lagerzapfen 18, 18' auf, die in Lagern in den Rahmenteilen 2 gehalten sind. An einem der Lagerzapfen 18, 18' ist eine Antriebseinrichtung, bestehend aus einem Antriebsmotor 4 und einem Untersetzungsgetriebe 5, z.B. in Gestalt eines Kettentriebes, vorgesehen, um das Gehäuse 1 in Drehbewegung zu versetzen.

Das Bezugszeichen 21 betrifft eine Einrichtung zur Steuerung ein oder mehrerer der Funktionen wie der Drehbewegung des Gehäuses 1, der Stellung des Schliesselementes 10 der Verbindungspassage 9, des Betriebes der Mahlwerke 12, 12' und 16 etc.. Temperaturmessfühler 19 bzw. 20 zur Erfassung der in den Gehäusebereichen 7 und 8 herrschenden Temperaturen liefern entsprechende Signale an die Steuereinrichtung 21, um die erwähnten Funktionen in Abhängigkeit von den gemessenen Temperaturen zu steuern. Die Steuereinrichtung 21 kann ferner so ausgelegt sein, dass die Drehung des Gehäuses 1 bzw. der Betrieb der Mahlwerke sowie des Schliesselementes 10 der Verbindungspassage 9 in Abhängigkeit von der Zeit und den in den Gehäusebereichen 7, 8 gemessenen Temperaturen gesteuert wird.

Schliesslich ist darauf hinzuweisen, dass, obschon nicht dargestellt, eine Einrichtung vorgesehen ist, um Frischluft in erwärmtem Zustand ins Innere eines oder beider Gehäusebereiche 7, 8 einzuführen und/oder die darin befindliche Luft nach aussen abzuführen. Die Erwärmung der Frischluft erfolgt vorzugsweise unter Ausnutzung der bei der Umwandlung des Gutes entstehenden Prozesswärme, so dass auf eine Energiezufuhr von aussen ganz oder überwiegend verzichtet werden kann. Die Frischluftzu-/abfuhr- sowie Erwärmungseinrichtung kann entsprechend der DE-C-38 37 865 ausgebildet sein, so dass bezüglich Details auf diese Druckschrift verwiesen werden kann.

Die, wie vorbeschrieben, aufgebaute Umwandlungsvorrichtung arbeitet wie folgt:

Das zu behandelnde Gut, bei dem es sich um biologisch abbaubare Abfälle aller Art, insbesondere Abfälle aus Küchen- und Gaststättenbetrieben, handeln kann, wird vorzugsweise in vorzerkleinerter Form über die Einlassöffnung 33 in den ersten Gehäusebereich 7 eingegeben. Sobald ein geeigneter Füllungsgrad von z.B. 60 bis 70 % erreicht ist, wird die Einlassöffnung 16 verschlossen und an den Antriebsmotor 4 ein Befehl zur Drehung des Gehäuses 1 gegeben. Während der Drehung wird das im ersten Gehäusebereich 7 befindliche Gut ständig umgewälzt. Damit verbunden sein kann, wenn erwünscht, eine weitere Grobzerkleinerung des Gutes mittels des zentralen Mahlwerkes 16, um das Gut in eine Partikelgrösse zu bringen, die für eine weitere Verarbeitung durch das Feinmahlwerk 12 geeignet ist.

Das eingegebene Gut wird unter kontinuierlichem oder intervallmässigem wechselseitigen Drehen des Gehäuses 1 eine Zeitlang umgewälzt und vermischt. Da während der Drehung des Gehäuses 1 das radial aussenliegende Feinmahlwerk 12 wiederholt durch das eingegebene Gut hindurchbewegt wird, erfährt dieses eine weitere Zerkleinerung bis zu einer für die Umwandlung geeigneten Partikelgrösse. Das Grobmahlwerk 16 kann nach einer geeigneten Zeit abgestellt werden.

Die Umwandlung des Gutes im ersten Gehäusebereich 7 geht mit einem Anstieg der Temperatur einher. Wegen der Isolierung des Gehäuses 1 kann erreicht werden, dass die Umwandlung im wesentlichen ohne Wärmeverluste an die Umgebung abläuft. Zur Einhaltung von für die Aktivität der Mikroorganismen günstigen Umwandlungsbedingungen kann ins Innere des Gehäusebereiches 7 kontinuierlich oder von Zeit zu Zeit erwärmte Frischluft eingeführt werden.

Die Umwandlung des Gutes im ersten Gehäusebereich 7 wird erfindungsgemäss nur solange fortgesetzt, bis festgestellt wird, dass die Temperatur nicht mehr ansteigt (Ende der Umwandlungs-Startphase). Unmittelbar danach oder nach Verstreichen einer geeigneten Zeitdauer von z.B. einigen Stunden wird von der Steuereinrichtung 21 an das Betätigungsorgan 11 des Schliesselementes 10 ein Befehl gesandt, um das Schliesselement 10 in eine Stellung zu bringen, bei der eine Verbindung zwischen dem Inneren der ersten und zweiten Gehäusebereiche 7, 8 zustande kommt. Das Schliesselement 10 kann dabei wie eine Leitschaufel wirken, indem es bei einer Drehung des Gehäuses 1 in eine Richtung das im ersten Gehäusebereich 7 befindliche Gut durch die Verbindungspassage 9 in den zweiten Gehäusebereich 8 pflugscharartig einleiten kann.

Erfindungsgemäss wird nicht die gesamte Menge an Gut im ersten Gehäusebereich 7 in den zweiten Gehäusebereich 8 überführt, sondern nur eine geeignete Teilmenge, die zwischen etwa 30 und 70 % der Füllung des ersten Gehäusebereiches 7 betragen kann. Der Anteil an überführtem zu zurückbleibendem Gut kann je nach Art des zu behandelnden Gutes variieren. Für biologisch abbaubare Abfälle aus Küchen und Gaststättenbetrieben wurde festgestellt, dass gute Ergebnisse bei einer Überführung von ca. 50 % des im ersten Gehäusebereich 7 befindlichen, bis zu einem Zwischenstadium umgewandelten Gutes erzielt werden.

Nach der Überführung des Gutes in den zweiten Gehäusebereich 8 wird die Verbindungspassage 9 wieder geschlossen und kann in das Innere des ersten Gehäusebereiches 7 über die Einlassöffnung 33 wieder neues unbehandeltes Gut bis zu dem gewünschten Füllungsgrad eingegeben werden, so dass im ersten Gehäusebereich 7 sowohl unbehandeltes als teilweise umgewandeltes Gut vorhanden ist.

Unter weiterer Mischung und Umwälzung sowie Zerkleinerung des in den Gehäusebereichen 7, 8 befindlichen Gutes wird die Kompostierungsbehandlung fortgesetzt. Insbesondere erfolgt im zweiten Gehäusebereich 8 die Fertigkompostierung des darin eingeführten, teilweise kompostierten Gutes in Biomasse. Ein Mass für die Beendigung des Umwandlungsprozesses im zweiten Gehäusebereich 8 ist ein Absenken der darin herrschenden Temperatur von einem gemessenen Maximum. Das Absinken der Temperatur zeigt an, dass die Aktivität der Mikroorganismen allmählich zum Erliegen kommt. Es wurde festgestellt, dass die Umwandlung im wesentlichen als abgeschlossen angesehen werden und eine Entnahme des Gutes aus dem zweiten Gehäusebereich 8 über die Auslassöffnung 17 erfolgen kann, wenn die Temperatur im zweiten Gehäusebereich 8 um etwa 20 % vom gemessenen Maximalwert abgefallen ist. Die gemessene maximale Temperatur in den Gehäusebereichen 7 und 8 hängt vom Zustand und der Art des zu behandelnden Gutes ab und kann z.B. zwischen 60° und 75° C betragen.

Dadurch, dass die Umwandlung im ersten Gehäusebereich 7 nur bis zu einem Zwischenstadium zugelassen wird, ist in diesem Gehäusebereich stets eine ausreichende Menge an aktiven Mikroorganismen vorhanden, die dafür sorgen, dass der Prozess der Umwandlung des neu eingegebenen Gutes (Startphase) umgehend in Gang gesetzt wird. Ein wesentliches Merkmal der Erfindung ist daher die Aufteilung des Umwandlungsprozesses in eine Start- und Fertigphase, die im wesentlichen getrennt, d.h. ohne gegenseitige Beeinflussung ablaufen.

In manchen Fällen kann es erforderlich oder gewünscht sein, dass die erhaltene Biomasse einem nachfolgenden Trocknungsprozess unterzogen wird. Dies kann erfindungsgemäss dadurch erreicht werden, dass man dem ersten und zweiten Gehäusebereich 7, 8 einen weiteren dritten Gehäusebereich hinzufügt, wie dies in Fig. 3 gezeigt ist. Der dritte Gehäusebereich 22 kann im wesentlichen wie die vorhergehenden Gehäusebereiche 7, 8 aufgebaut sein. Er braucht jedoch kein Mahlwerk zu enthalten. Einrichtungen (nicht gezeigt) sind vorgesehen, um in den dritten Gehäusebereich 22 erwärmte Luft einzuführen und die Luft zusammen mit der aufgenommenen Feuchtigkeit nach aussen abzuführen, was ein Trocknen des im dritten Gehäusebereich 22 befindlichen Gutes unter gleichzeitiger Absenkung von dessen Temperatur bewirkt.

Eine Verbindungspassage 23 in einer Trennwand 26 mit einer Schliesseinrichtung 29 ähnlich der zwischen dem ersten und zweiten Gehäusebereich 7, 8 ermöglicht eine gezielte Überführung des kompostierten Gutes von dem zweiten in den dritten Gehäusebereich 22. Vorgesehen sein kann ferner eine Austragseinrichtung 24, um das getrocknete kompostierte Gut aus dem dritten Gehäusebereich 22 nach aussen zu befördern. Die Austragseinrichtung 24 kann, wie dargestellt, eine in einem konzentrisch zur Drehachse 3 sich erstreckenden Zylindergehäuse 27 angeordnete Förderschnecke 28 umfassen, die durch einen Antriebsmotor gezielt angetrieben werden kann, um das Gut aus dem Inneren des Gehäusebereiches 22 zu einer Auslassöffnung 30 zu bewegen.

Fig. 3 zeigt ferner eine modifizierte Ausbildung der Einrichtung zum Drehen des Gehäuses 1 um die Drehachse 3 mittels seitlich des Gehäuses gelagerter angetriebener Rollen 31, auf denen sich mit den Gehäuseseitenwänden verbundene Radkränze 32 antriebsmässig abstützen, so dass eine Drehung der Rollen 31 eine ensprechende Drehung des Gehäuses 1 bewirkt.

Mit den Bezugszeichen 12, 12' sind Mahlwerke angedeutet, die anders als bei der vorbeschriebenen Ausführungsform von der Umfangsseite des Gehäuses 1 ins Innere der Gehäusebereiche 7, 8 ragen. Bezüglich weiterer Details der Ausführungsform der Erfindung nach Fig. 3 kann im übrigen auf die vorbeschriebene erste Ausführungsform verwiesen werden.

Fig. 4 zeigt den Verlauf der Temperatur und der Feuchtigkeit des zu behandelnden Gutes in den einzelnen Gehäusebereichen 7, 8, 22. Wie zu erkennen ist, findet die Umwandlung im ersten und zweiten Gehäusebereich 7 und 8, d.h. während der Start- und Fertigphase, im wesentlichen ohne Wärmeverluste an die Umgebung und bei im wesentlichen gleichbleibendem Feuchtigkeitsgehalt des zu behandelnden Gutes statt.

Anstelle von oder zusätzlich zu einem Trocknen kann auch ein Sterilisieren des Gutes in der dritten Kammer 22 vorgesehen werden.

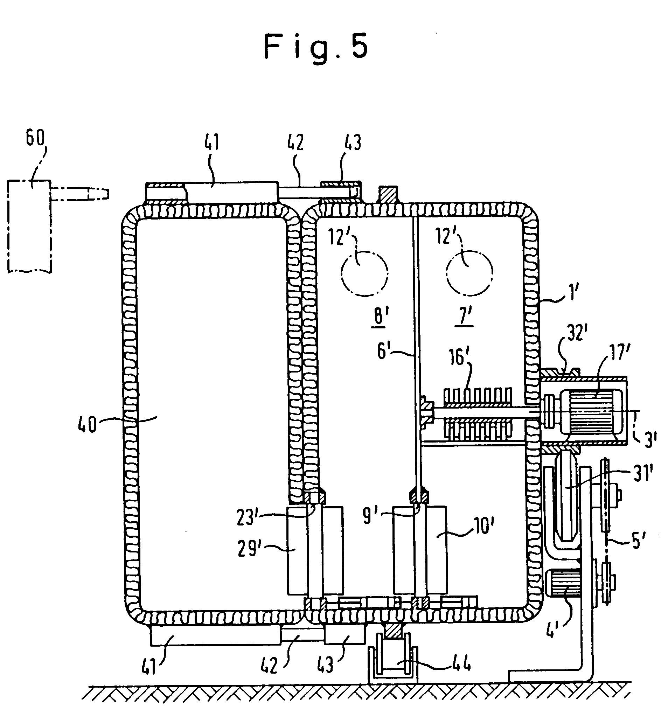

Fig. 5 zeigt eine weitere Ausführungsform der Erfindung. Diese Ausführungsform unterscheidet sich von der nach Fig. 3 im wesentlichen darin, dass der dritte Gehäusebereich weggelassen ist und anstelle davon eine an die Behandlungsvorrichtung ankuppel- bzw andockbare Einheit 40 vorgesehen ist. Bezüglich weiterer Details kann auf Fig. 3 mit zugehöriger Beschreibung Bezug genommen werden. In Fig. 5 tragen daher gleiche oder ähnliche Bauteile wie bei der Ausführungsform nach Fig. 3 die gleichen, jedoch mit dem Index ' versehenen Bezugszeichen.

Die ankuppelbare Einheit 40 stellt einen grundsätzlich geschlossenen Behälter mit einer an das Gehäuse 1' der Behandlungsvorrichtung angepassten umfänglichen Konfiguration mit einer Einlassöffnung an einer Stirnseite dar. Die Einlassöffnung ist entspechend der Auslasspassage 23' des zweiten Gehäusebereiches 8' angeordnet und kann damit in Ausrichtung gebracht werden, so dass bei einer entsprechenden Betätigung der Schliesseinrichtung 29' das im zweiten Gehäusebereich 8' befindliche kompostierte Gut in die abtrennbare Einheit 40 überführt werden kann.

Obschon andere geeignete Einrichtung vorgesehen werden können, um die ankuppelbare Einheit 40 mit dem Gehäuse 1' vorübergehend zu verbinden, sind bei der vorliegenden Ausführungsform zu diesem Zweck zwei oder mehrere in geeigneter Weise aussenumfänglich der Einheit 40 verteilt angeordnete hülsenförmige Elemente 41 vorgesehen, in denen einerends jeweils ein Führungszapfen oder -dorn 42 gehalten ist, während das gegenüberliegende andere Ende der hülsenförmigen Elemente 41 offen ist. Die Führungszapfen 42 ragen aus den hülsenförmigen Elementen 41 im wesentlichen parallel zur Drehachse 3' der Vorrichtung ab und können in dazu ausgerichtete am Gehäuse 1' befestigte Aufnahmeelemente 43 eingreifen. Geeignete Einrichtungen (nicht dargestellt) sind ferner vorgesehen, um die Führungszapfen 42 in der Eingriffsstellung mit den Aufnahmeelementen 43 lösbar zu verrasten.

Sobald die Einheit 40 am Gehäuse 1' fixiert und dabei positioniert ist, so dass die Einlassöffnung der Einheit 40 mit der Auslasspassage 23' des zweiten Gehäusebereiches 8' in einer ausgerichteten Beziehung steht, werden das Gehäuse 1' und die damit gekuppelte Einheit 40 in Drehung versetzt und wird die Schliesseinrichtung 29' zu einem geeigneten Zeitpunkt betätigt, um die Auslasspassage 23' zu öffnen und das im zweiten Gehäusebereich 8' befindliche kompostierte Gut in die Einheit 40 zu überführen. Sobald die Einheit 40 mit kompostiertem Gut gefüllt ist, wird der Betrieb der Behandlungsvorrichtung kurzzeitig unterbrochen, um die gefüllte Einheit vom Gehäuse 1' abzunehmen und durch eine leere zu ersetzen. Da das kompostierte Gut ein wesentlich kleineres Volumen als das in den ersten Gehäusebereich 7' eingeführte zu behandelnde Gut einnimmt, werden Betriebsunterbrechungen für den Austauch der Einheit 40 erst nach Behandlung wesentlicher Mengen an eingeführtem Gut erforderlich.

Zum Drehen des Gehäuses 1' ist dieses zusätzlich zu den antriebsseitigen Dreheinrichtungen 31', 32' der Ausführungsform nach Fig. 3 an einer bei 44 angedeuteten Rollenanordnung abgestützt, die umfänglich des Gehäuses 1' vorgesehen ist, so dass das Ankuppeln und Abnehmen der Einheit 40 durch die Rollenanordnung nicht beeinträchtigt wird.

Wie ferner in Fig. 5 durch strichpunktierte Linien angedeutet ist, kann eine Handhabungseinrichtung 60 mit Zapfen vorgesehen sein, die so angeordnet sind, dass sie in die freien Enden der hülsenförmigen Elemente 41 der ankuppelbaren Einheit 40 eingreifen können. Die Einheit 40 kann daher nach Abnahme vom Gehäuse 1' von einer Bedienungsperson mittels der Handhabungseinrichtung 60 zu einer Sammelstelle bewegt werden, von der mehrere gefüllte Einheiten 40, z.B. mittels eines Lastwagens, gemeinsam zur weiteren Verwendung des kompostierten Gutes abtransportiert werden können. Zum Abtransport können die Zapfen 42 einer Einheit 40 in Eingriff mit den freien Enden der hülsenförmigen Elemente 41 einer benachbarten Einheit 40 gebracht werden, so dass zwei oder mehrere Einheiten 40 zu einem für den Abtransport besonders leicht zu handhabenden Gebinde zusammengefasst werden können.

Darauf hinzuweisen ist ferner, dass, wenn erwünscht, die ankuppelbare Einheit 40 auch in Verbindung mit einer Behandlungsvorrichtung verwendet werden kann, bei der das kompostierte Gut in einer dritten Kammer entsprechend der Ausführungsform nach Fig. 3 zunächst getrocknet oder sterilisiert wird, bevor es in die ankuppelbare Einheit 40 überführt wird.

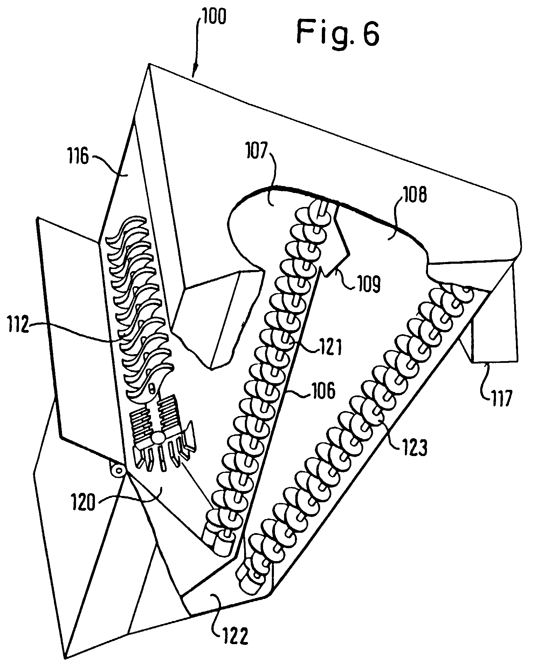

Die in Fig. 6 gezeigte dritte Ausführungsform der Erfindung hat im Gegensatz zu der vorerwähnten Ausführungsform eine im wesentlichen vertikale Ausrichtung. Sie umfasst ein wärmeisoliertes Gehäuse 100 mit einer an seiner Vorderseite vorgesehenen verschliessbaren Einlassöffnung 116, die einen Zugang zu einem ersten Gehäusebereich 107 schafft. Im ersten Gehäusebereich 107 ist ein Mahlwerk 112 zum Feinzerkleinern des eingegebenen Gutes vorgesehen. Der ersten Gehäusebereich 107 wird durch eine Trennwand 106 definiert, die das Innere des Gehäuses 100 in zwei voneinander getrennte Bereiche 107, 108 mit jeweils im wesentlichen vertikaler Erstreckung unterteilt.

Am unteren Abschnitt jedes Gehäusebereiches 107, 108 ist ein Sumpf 120 bzw. 122 ausgebildet, in denen sich das zu behandelnde Gut sammeln kann. In jedem Gehäusebereich 107, 108 ist eine Fördereinrichtung in Gestalt z.B. einer Förderschnecke 121, 123 angeordnet, die das Gut aus dem jeweiligen Sumpf 120 bzw. 122 nach oben bewegt, so dass dieses von einem niedrigen, im wesentlichen durch den Sumpf 120 bzw. 122 definierten Niveau auf eine höheres Niveau bewegt werden kann, von wo es in freiem Fall zurück auf das niedrige Niveau fallen kann.

Insbesondere liegt das höhere Niveau des ersten Gehäusebereiches 107 im Bereich einer Übergabe- oder Verbindungspassage 109, die den ersten und zweiten Gehäusebereich 107, 108 miteinander verbindet, und das des zweiten Gehäusebereiches 108 im Bereich einer Auslassöffnung 117. Die Verbindungspassage 109 sowie die Auslassöffnung 117 können durch geeignete nicht gezeigte Schliesseinrichtungen gezielt geschlossen oder geöffnet werden.

Nicht dargestellt sind im übrigen Einrichtungen zur Zufuhr erwärmter Frischluft in die Gehäusebereiche 107, 108 sowie zur Steuerung des Betriebes des Mahlwerkes 112, der Förderschnecken 121, 123, sowie der nicht gezeigten Einrichtungen zum Öffnen und Schliessen der Verbindungspassage 109 und der Auslassöffnung 117. Diese Einrichtungen und andere Details können analog zu denen der vorerwähnten in Fig. 1 und 2 gezeigten Ausführungsform ausgebildet sein, so dass hierauf verwiesen werden kann.

Die Arbeitsweise der zweiten Ausführungsform der Erfindung entspricht im wesentlichen der der vorbeschriebenen. Insbesondere erfolgt die Umwandlung des zu behandelnden Gutes in zwei Stufen, indem sie im ersten Gehäusebereich 107 nur bis zu einem bestimmten Zwischenstadium zugelassen wird und erst im zweiten Gehäusebereich 108 zu einem Abschluss gebracht wird, wobei ein Teil des teilweise umgewandelten Gutes im ersten Gehäusebereich 107 verbleibt. Dadurch ist gewährleistet, dass im ersten Gehäusebereich 107 stets eine genügende Menge an aktiven Mikroorganismen vorhanden ist, um die Umwandlung von neu eingegebenem Gut unter entsprechender Verkürzung der Behandlungszeit sofort in Gang zu setzen. Im Unterschied zu der vorerwähnten Ausführungsform erfolgt das Umwenden und Mischen des zu behandelnden Gutes hier jedoch durch Bewegung des Gutes zwischen Stellen höheren und niedrigeren Niveaus mit einer durch freien Fall gekennzeichneten Bewegungszwischenphase.

Es versteht sich, dass die Erfindung nicht auf die beschriebenen und gezeigten Ausführungsbeispiele beschränkt ist.

## Patentansprüche

1. Verfahren zur biologischen Umwandlung (Kompostierung) organischer Stoffe in Biomasse, indem die organischen Stoffe in einer im wesentlichen geschlossenen Umgebung eine Zeitlang durch Feinzerkleinern und Mischen behandelt werden, welche Behandlung in wenigstens zwei voneinander getrennten, in sich im wesentlichen geschlossenen Kammern vorgenommen wird, wobei die Behandlung in der ersten Kammer mit einer teilweisen Umwandlung der eingegebenen organischen Stoffe in Biomasse einhergeht und ein Teil des teilweise umgewandelten Gutes aus der ersten in die zweite Kammer zur Fertigkompostierung überführt wird, dadurch gekennzeichnet, dass die Überführung des Gutes von der ersten in die zweite Kammer erfolgt, nachdem die Temperatur in der ersten Kammer einen bestimmten für die Umwandlung des in der ersten Kammer behandelten Gutes bis zu einem bestimmten Zwischenstadium kennzeichnenden Wert erreicht hat, und dass in die erste Kammer neue organische Stoffe zur Behandlung in Gegenwart eines verbleibenden Teiles des bis zum Zwischenstadium umgewandelten Gutes eingegeben werden.

2. Verfahren nach Anspruch 1, dadurch gekennzeichnet, dass eine Entnahme von Biomasse aus der zweiten Kammer in Abhängigkeit von einer in der zweiten Kammer gemessenen Temperatur gesteuert wird.

3. Verfahren nach Anspruch 2, dadurch gekennzeichnet, dass die Überführung von der ersten in die zweite Kammer eine bestimmte Zeitlang nach Erreichen eines Temperaturmaximums in der ersten Kammer vorgenommen wird.

4. Verfahren nach Anspruch 2, dadurch gekennzeichnet, dass die Entnahme frühestens erfolgt, wenn die Temperatur in der zweiten Kammer von einem Maximum um ein bestimmtes Mass abgesunken ist.

5. Verfahren nach einem der vorhergehenden Ansprüche, dadurch gekennzeichnet, dass ein Anteil zwischen etwa 30 und 70 %, vorzugsweise etwa 50 %, des bis zum Zwischenstadium umgewandelten Gutes in die zweite Kammer überführt wird.

6. Verfahren nach einem der vorhergehenden Ansprüche, dadurch gekennzeichnet, dass die Behandlung unter Zufuhr von erwärmter Frischluft erfolgt.

7. Verfahren nach einem der vorhergehenden Ansprüche, dadurch gekennzeichnet, dass die Behandlung in Gegenwart der bei der Umwandlung entstehenden Prozesswärme oder unter deren wesentlicher Ausnutzung vorgenommen wird.

8. Verfahren nach einem der vorhergehenden Ansprüche, dadurch gekennzeichnet, dass das in der zweiten Kammer kompostierte Gut in einer dritten Kammer einer Trocknungs- und/oder Sterilisationsbehandlung unterworfen wird.

9. Vorrichtung zur Durchführung des Verfahrens nach Anspruch 1, mit wenigstens zwei, in sich im wesentlichen geschlossenen, durch eine Verbindungspassage mit einer Einrichtung zu deren Öffnen und Schliessen miteinander verbundenen Behandlungsbereichen mit Ein- und Auslassöffnungen für das zu behandelnde bzw behandelte Gut, einer Einrichtung zum Feinzerkleinern des zu behandelnden Gutes, die wenigstens ein Mahlwerk wenigstens im ersten Behandlungsbereich umfasst, und einer Einrichtung zum Mischen des zu behandelnden Gutes, gekennzeichnet durch eine Einrichtung (21) zum Steuern des Öffnens und Schliessens der Verbindungspassage (9) zwischen den Behandlungsbereichen (7,8,107,108) in Abhängigkeit von mittels einer Temperaturmesseinrichtung (19) im ersten Behandlungsbereich gemessener Temperaturen.

10. Vorrichtung nach Anspruch 9, dadurch gekennzeichnet, dass die Behandlungsbereiche (7,8) um eine im wesentlichen horizontale Drehachse (3) gemeinsam drehbar sind.

11. Vorrichtung nach Anspruch 10, dadurch gekennzeichnet, dass das Mahlwerk (12) in einem radialen Abstand von der Drehachse (3) angeordnet ist.

12. Vorrichtung nach Anspruch 9, 10 oder 11, dadurch gekennzeichnet, dass ein weiteres Mahlwerk (12') im zweiten Behandlungsbereich (8) angordnet ist.

13. Vorrichtung nach Anspruch 10, dadurch gekennzeichnet, dass die Verbindungspassage (9) zwischen dem ersten und zweiten Behandlungsbereich (7,8) in einem radialen Abstand von der Drehachse (3) angordnet ist.

14. Vorrichtung nach einem der Ansprüche 9 bis 13, gekennzeichnet durch einen dritten, im wesentlichen geschlossenen Behandlungsbereich (22), in den das behandelte Gut aus dem zweiten Behandlungsbereich (8) zur Trocknung einführbar ist.

15. Vorrichtung nach einem der Ansprüche 9 bis 14, dadurch gekennzeichnet, dass jeder Behandlungsbereich (7,8,22,107,108) wärmeisoliert ist.

16. Vorrichtung nach einem der Ansprüche 9 bis 15, gekennzeichnet durch eine Einrichtung zur Bereitung von unter Ausnutzung der Prozesswärme erwärmter Frischluft und zu deren Einführung in ein oder mehreren der Behandlungsbereiche (7,8,22,107,108).

17. Vorrichtung nach einem der Ansprüche 9 bis 16, gekennzeichnet durch eine Behältereinheit (40) zum Aufnehmen von behandeltem Gut und eine Einrichtung (41,42,43) zum lösbaren Ankuppeln der Behältereinheit an einen der Behandlungsbereiche (7,8), wobei eine Einlassöffung der Behältereinheit in der angekuppelten Position zu einer Auslassöffnung (23) des betreffenden Behandlungsbereiches ausgerichtet ist.

18. Vorrichtung nach Anspruch 17, dadurch gekennzeichnet, dass mehrere Behältereinheiten (40) zu einem Transportgebinde verbindbar sind.

## Claims

1. A process for biological conversion (composting) of organic substances into biomass, in which said organic substances are treated in a substantially closed environment for a time by comminuting and mixing, this treatment being undertaken in at least two substantially closed chambers separate from each other, the treatment in said first chamber involving a partial conversion of the introduced organic substances into biomass and a portion of the partially converted material being transferred from said first chamber into said second chamber for final composting, characterized in that the transfer of the material from said first chamber into said second chamber occurs after the temperature in said first chamber has attained a certain value characteristic for the conversion of the material treated in said first chamber up to a certain intermediate stage, and in that into said first chamber new organic substances are introduced for treatment in the presence of a remaining portion of the material converted up to said intermediate stage.

2. The process as set forth in claim 1, characterized in that removal of biomass from said second chamber is controlled in response to a temperature measured in said second chamber.

3. The process as set forth in claim 2, characterized in that the transfer from said first chamber into said second chamber is undertaken for a certain time after the temperature in said first chamber has achieved a maximum.

4. The process as set forth in claim 2, characterized in that the removal occurs at the earliest when the temperature in said second chamber has decreased from a maximum by a certain amount.

5. The process as set forth in any of the preceding claims, characterized in that a percentage between approximately 30 and 70%, preferably approximately 50%, of the material converted up to said intermediate stage is transferred into said second chamber.

6. The process as set forth in any of the preceding claims, characterized in that the treatment occurs with application of heated fresh air.

7. The process as set forth in any of the preceding claims, characterized in that the treatment is carried out in the presence of the process heat resulting during conversion and by making substantially use thereof.

8. The process as set forth in any of the preceding claims, characterized in that the material composted in said second chamber is subjected in a third chamber to a drying and/or sterilizing treatment.

9. An apparatus for carrying out the process as set forth in claim 1, comprising at least two substantially closed treatment areas connected to each other by a connecting passage having means for opening and closing thereof, said treatment areas having intake and outlet openings for the material to be treated or already treated, a means for comminuting said material to be treated comprising at least one grinding device in said treatment area, and a means for mixing said material to be treated, characterized by a means (21) for controlling said opening and closing of said connecting passage (9) between said treatment areas (7, 8, 107, 108) in response to temperatures measured by means of a temperature measuring means (19) in said first treatment area.

10. The apparatus as set forth in claim 9, characterized in that said treatment areas (7, 8) are rotatable in common about a substantially horizontal axis of rotation (3).

11. The apparatus as set forth in claim 10, characterized in that said grinding device (12) is arranged radially spaced away from said axis of rotation (3).

12. The apparatus as set forth in claim 9, 10 or 11, characterized in that a further grinding device (12') is arranged in said second treatment area (8).

13. The apparatus as set forth in claim 10, characterized in that said connecting passage (9) between said first and said second treatment area (7. 8) is arranged radially spaced away from said axis of rotation (3).

14. The apparatus as set forth in any of the claims 9 to 13, characterized by a third, substantially closed treatment area (22) into which said treated material is introducable from said second treatment area (8) for drying.

15. The apparatus as set forth in any of the claims 9 to 14, characterized in that each treatment area (7, 8, 22, 107, 108) is heat-insulated.

16. The apparatus as set forth in any of the claims 9 to 15, characterized by means for providing fresh air heated by making use of the process heat and for introducing same into one or more of said treatment areas (7, 8, 22, 107, 108).

17. The apparatus as set forth in any of the claims 9 to 16, characterized by a container unit (40) for receiving said treated material and a means (41, 42, 43) for releasably coupling said container unit to one of said treatment areas (7, 8), one intake opening of said container unit being oriented in the coupled position to an outlet opening (23) of the corresponding treatment area.

18. The apparatus as set forth in claim 17, characterized in that several container units (40) are connectable into a coupled set for transportation thereof.

## Revendications

1. Procédé de transformation biologique (compostage) de matières organiques en biomasse en traitant les matières organiques pendant une certaine durée dans un milieu sensiblement fermé par broyage fin et par mélange, lequel traitement est effectué dans au moins deux chambres séparées l'une de l'autre, sensiblement fermées en soi, le traitement consistant dans la première chambre en une transformation partielle en biomasse des matières organiques introduites et une partie du matériau partiellement transformé étant transféré de la première chambre dans la deuxième chambre pour l'achèvement du compostage, caractérisé en ce que le transfert du matériau de la première dans la deuxième chambre a lieu après que la température dans la première chambre a atteint une valeur déterminée caractéristique de la transformation du matériau traité dans la première chambre jusqu'à un stade intermédiaire déterminé, et en ce que de nouvelles matières organiques sont introduites dans la première chambre pour leur traitement en présence d'une partie restante du matériau transformé jusqu'au stade intermédiaire.

2. Procédé selon la revendication 1, caractérisé en ce qu'un soutirage de biomasse de la deuxième chambre est commandé en fonction d'une température mesurée dans la deuxième chambre.

3. Procédé selon la revendication 2, caractérisé en ce que le transfert de la première chambre dans la deuxième chambre est effectué un certain temps après avoir atteint un maximum de température dans la première chambre.

4. Procédé selon la revendication 2, caractérisé en ce que le soutirage a lieu au plus tôt lorsque la température dans la deuxième chambre est redescendue d'une certaine valeur à partir d'un maximum.

5. Procédé selon l'une quelconque des revendications précédentes, caractérisé en ce qu'une proportion comprise entre environ 30 et 70 %, de préférence d'environ 50 %, du matériau transformé jusqu'au stade intermédiaire est transférée dans la deuxième chambre.

6. Procédé selon l'une quelconque des revendications précédentes, caractérisé en ce que le traitement s'effectue en apportant de l'air frais réchauffé.

7. Procédé selon l'une quelconque des revendications précédentes, caractérisé en ce que la transformation est effectuée en présence de la chaleur de processus générée par la transformation ou en utilisant principalement celle-ci.

8. Procédé selon l'une quelconque des revendications précédentes, caractérisé en ce que le matériau composté de la deuxième chambre est soumis à un traitement de séchage et/ou de stérilisation dans une troisième chambre.

9. Dispositif pour la mise en oeuvre du procédé selon la revendication 1 comprenant au moins deux zones de traitement sensiblement fermées en soi, reliées l'une à l'autre par un passage de communication comprenant un dispositif pour son ouverture et sa fermeture, pourvues d'ouvertures d'admission et de sortie pour le matériau à traiter, respectivement traité, un dispositif pour le broyage fin du matériau à traiter qui comprend au moins un broyeur au moins dans la première zone de traitement, et un dispositif pour mélanger le matériau à traiter, caractérisé par un dispositif (21) pour commander l'ouverture et la fermeture du passage de communication (9) entre les zones de traitement (7, 8, 107, 108) en fonction d'une température mesurée dans la première zone de traitement au moyen d'un appareil de mesure de la température (19).

10. Dispositif selon la revendication 9, caractérisé en ce que les zones de traitement (7, 8) peuvent tourner autour d'un axe de rotation commun (3) sensiblement horizontal.

11. Dispositif selon la revendication 10, caractérisé en ce que le broyeur (12) est disposé à une certaine distance radiale de l'axe de rotation (3).

12. Dispositif selon la revendication 9, 10 ou 11, caractérisé en ce qu'un autre broyeur (12') est disposé dans la deuxième zone de traitement (8).

13. Dispositif selon la revendication 10, caractérisé en ce que le passage de communication (9) entre la première et la deuxième zone de traitement (7, 8) est disposé à une certaine distance radiale de l'axe de rotation (3).

14. Dispositif selon l'une quelconque des revendications 9 à 13, caractérisé par une troisième zone de traitement sensiblement fermée (22) dans laquelle le matériau traité provenant de la deuxième zone de traitement (8) peut être introduit pour son séchage.

15. Dispositif selon l'une quelconque des revendications 9 à 14, caractérisé en ce que chaque zone de traitement (7, 8, 22, 107, 108) est isolée thermiquement.

16. Dispositif selon l'une quelconque des revendications 9 à 15, caractérisé par un dispositif de préparation d'air frais réchauffé en utilisant la chaleur du processus et d'introduction de celui-ci dans une ou plusieurs des zones de traitement (7, 8, 22, 107, 108).

17. Dispositif selon l'une quelconque des revendications 9 à 16, caractérisé par une unité de récipient (40) destinée à recevoir du matériau traité et un dispositif (41, 42, 43) pour l'accouplement détachable de l'unité de récipient à une des zones de traitement (7, 8) une ouverture d'admission de l'unité de récipient étant alignée dans la position accouplée avec une ouverture de sortie (23) de la zone de traitement concernée.

18. Dispositif selon la revendication 17, caractérisé en ce que plusieurs unités de récipient (40) peuvent être réunies en un ensemble de transport.
